# EUROPEAN PATENT SPECIFICATION

(11) **EP 4 071 452 B1**
(45) Date of publication and mention of the grant of the patent: **30.07.2025**
(21) Application number: 20939258.8
(22) Date of filing: 08.12.2020
(51) Int. Cl.: G01L 17/00, G01L 9/00, H01M 10/48

(54) **BATTERY CELL PRESSURE MEASURING APPARATUS AND METHOD**
BATTERIEZELLENDRUCKMESSGERÄT UND VERFAHREN
APPAREIL ET PROCÉDÉ DE MESURE DE PRESSION D'ÉLÉMENTS DE BATTERIES

(30) Priority: 03.06.2020 KR 20200067005
(43) Date of publication of application: 12.10.2022
(73) Proprietor: LG Energy Solution, Ltd., Seoul 07335 (KR)
(72) Inventor: LEE, Ki Young, Daejeon 34122 (KR); KO, Dong Wan, Daejeon 34122 (KR); KIM, Doyul, Daejeon 34122 (KR)
(74) Representative: Hoffmann Eitle
(86) International application number: PCT/KR2020/017808
(87) International publication number: WO 2021/246599

(56) References cited:
- WO-A1-2016/200212
- WO-A1-2019/146960
- KR-A- 20070 093 165
- KR-A- 20130 037 863
- KR-A- 20180 103 591
- KR-B1- 101 965 447
- US-A1- 2018 248 160
- US-A1- 2018 261 824

## Description

### [TECHNICAL FIELD]

The present disclosure relates to a battery module including stacked battery cells and a method for measuring a pressure of battery cells, and more particularly to a battery module including stacked battery cells and a method for measuring a pressure of battery cells, which can measure the pressure of a battery cell when a swelling phenomenon of the battery cell occurs.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first, and then configure a battery pack by using at least one of the battery modules and adding other components. The battery pack may be used mainly as an energy source of an electric vehicle.

When designing such a battery module, it has been developed by pressing the battery cells at a constant pressure and thus, the battery cells are swelled in the process of repeating charging and discharging. However, as the battery cells are swelling, there is a concern that swelling may occur to such an extent as to push out the surrounding module frame and battery pack case.

Therefore, if the pressure of battery cells can be measured, action can be taken through the measured pressure before the appearance of the battery module or the battery pack is deformed, thereby securing the safety of the battery module and the battery pack. At this time, the swelling pressure of the battery cells can be measured by using pressure sensors, but in the case of the RSR (Force-Sensing Resistor) sensor, which has previously been often used as a pressure sensor, there is a problem it is small in size and thus dose not measure all the swelling pressures generated on the entire surface of the battery cells.

Further, when the size of the FSR sensor is made larger in compliance with the surface size of the battery cells, a spacer that supports an upper plate and a lower plate between the upper plate and the lower plate no longer supports the upper plate and the lower plate, which causes a problem that the swelling pressure of the battery cells are not accurately measured.

US 2018/261824 A1 relates to a method of detecting swelling of a battery using a pressure sensor and an electronic device using the method. An electronic device includes a pressure sensor that is located at a lower layer of a plurality of layers of a display and at an upper portion of the battery. The electronic device detects swelling of the battery through the pressure sensor located at the lower portion of the display. The pressure sensor may be an induction type pressure sensor including an inductor. A plurality of inductors are connected to a measuring device via a plurality of signal lines.

WO 2019/146960 A1 concerns a battery pressure detection sensor and a terminal including the same.

KR 101 965 447 B1 concerns a battery pack and a battery module using the same, wherein swelling of the battery cell is detected by a sensing terminal.

### [DETAILED DESCRIPTION OF THE INVENTION]

### [Technical Problem]

It is an object of the present invention to provide a battery module including stacked battery cells and a method for measuring a pressure of battery cells, which can accurately measure a swelling pressure of the battery cell.

The objects of the present disclosure are not limited to the aforementioned object, and other objects which are not described herein should be clearly understood by those skilled in the art from the following detailed description.

### [Technical Solution]

In order to achieve the above object, one embodiment of the present invention provides a battery module including stacked battery cells and a method for measuring a pressure of battery cells, as defined in claims 1 and 6. The battery module comprises: stacked battery cells, and a pressure sensor configured to measure the pressure of the battery cells stacked in the interior of the battery module, wherein the pressure sensor includes a plurality of pressure measuring units, a connection unit for connecting the plurality of pressure measuring units to each other, and an output unit connected to the connection unit and configured to output pressure values measured through the pressure measuring units, and wherein the plurality of pressure measuring units are arranged on a surface of the battery cell to measure the pressure of the battery cell. The output unit is formed of one unit, and the pressure values measured through the pressure measuring units are summed up into one value and outputted.

Each of the plurality of pressure measuring units may include a current input unit and a current output unit, the connection unit may include a current input side connection unit for connecting the current input units, and a current output side connection unit for connecting the current output units, and the output unit may be connected to the current input side connection unit and the current output side connection unit to output the pressure value measured by the plurality of pressure measuring units.

Each battery cell may include a cell body, a cell terrace, and an electrode lead, and the plurality of pressure measuring units may be arranged on the body surfaces of the cell bodies.

The plurality of pressure measuring units may be arranged in rectangular grids on the surface of the battery cell.

The plurality of pressure measuring units may be formed of a circular shape having a pattern.

A method for measuring a pressure of battery cells of the above battery module includes the steps of applying a pressure to the pressure sensor while the battery cells are swelled, transferring sensing information of the pressure sensor to a BMS (battery management system), and transferring the sensing information from a MCU (micro controller unit) inside the BMS to an ECU (electric control unit) or a user.

The step of transferring sensing information to a BMS may include transmitting a warning signal when a resistance value of the pressure sensor is 100,000 Ohm or less.

The step of transferring sensing information to a BMS may include transmitting a danger signal when a resistance value of the pressure sensor is 10,000 Ohm or less.

The method for measuring a pressure of battery cells may further include a step of setting a resistance value of the pressure sensor to be infinite, before the step of applying the pressure to the pressure sensor while the battery cells are swelled.

### [ADVANTAGEOUS EFFECTS]

The battery module including stacked battery cells and method for measuring a pressure of battery cells according to an embodiment of the present invention can cope with a swelling phenomenon of battery cells and measure the swelling pressure of the battery cells more accurately, by disposing a plurality of pressure measuring units on the surface of the battery cell and measuring the pressure of the battery cell.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is an exploded perspective view illustrating a battery module including battery cells;
FIG. 2 is a view illustrating a battery cell of FIG. 1;
FIG. 3 is a view illustrating a state in which an apparatus for measuring a pressure of battery cells according to an embodiment of the present disclosure is formed on the body surface of the cell body of FIG. 2;
FIG. 4 is a view illustrating a configuration of a FSR sensor according to a comparative example of the present disclosure;
FIG. 5 is a view illustrating a shape in which a plurality of FSR sensors according to the comparative example of the present disclosure are attached to the surface of battery cells; and
FIG. 6 is a flowchart illustrating a method for measuring a pressure of battery cells according to an embodiment of the present disclosure.

### [DETAILED DESCRIPTION OF THE EMBODIMENTS]

It should be appreciated that the exemplary embodiments, which will be described below, are illustratively described to help understand the present disclosure, and the present disclosure may be variously modified within the scope of the appended claims. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present invention.

A singular expression includes a plural expression unless they have definitely opposite meanings in the context. It should be understood that the terms "comprise", "include", and "have" as used herein are intended to designate the presence of stated features, numbers, steps, constitutional elements, or combinations thereof, but it should be understood that they do not preclude a possibility of existence or addition of one or more other features, numbers, steps, constitutional elements, or combinations thereof.

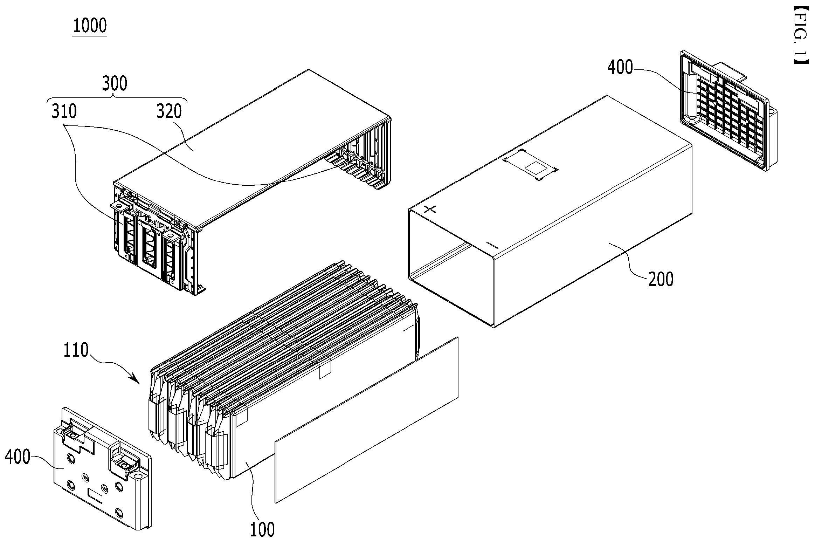

Hereinafter, an apparatus for measuring a pressure of battery cells will be described with reference to FIGS. 1 to 3.

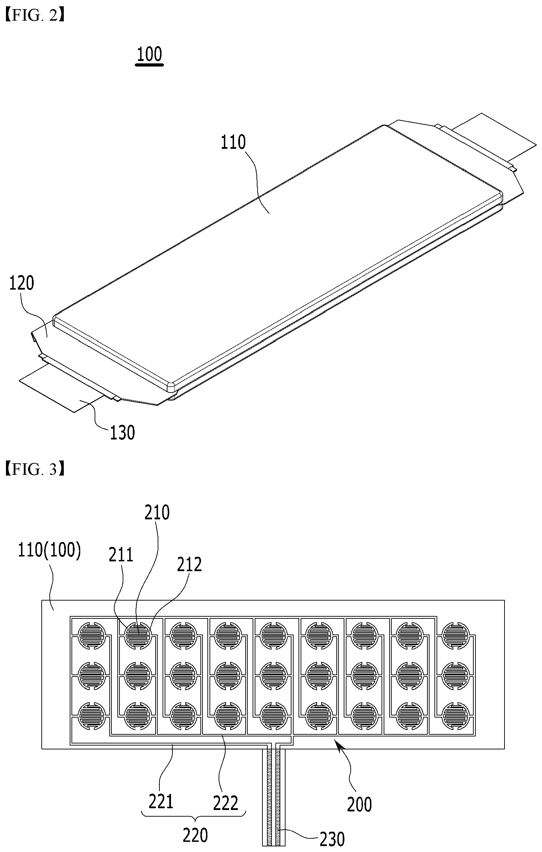

FIG. 1 is an exploded perspective view illustrating a battery module including battery cells. FIG. 2 is a view illustrating the battery cell of FIG. 1. FIG. 3 is a view illustrating a state in which an apparatus for measuring a pressure of battery cells according to an embodiment of the present invention is formed on the body surface of the cell body of FIG. 2.

Referring to FIGS. 1 to 3, an apparatus for measuring a pressure of battery cells includes a pressure sensor 200 configured to measure the pressure of battery cells 100 stacked in the interior of a battery module 1000. The pressure sensor 200 includes a plurality of pressure measuring units 210, a connection unit 220 connecting the plurality of pressure measuring units 210 to each other, and an output unit 230 connected to the connection unit 220 and configured to output pressure values measured through the pressure measuring units 210. The plurality of pressure measuring units 210 are arranged on surfaces of the battery cells 100 to measure the pressures of the battery cells 100.

The battery cell 100 is a secondary battery, and may be configured of a pouch type secondary battery. The battery cells 100 may be formed of a plurality of battery cells and the plurality of the battery cells may be stacked together so as to be electrically connected to each other, thereby forming the battery cell stack 101.

A module frame 500 can house the battery cell stack 101 and a busbar frame assembly 300 to protect electronic components constituting the battery module from the outside.

The busbar frame assembly 300 may include busbar frames 310 configured to cover front and rear surfaces of the battery cell stack 101, and an upper plate 320 configured to connect two busbar frames 310 on an upper surface of the battery cell stack 101. The busbar frame 310 can electrically connect an electrode lead formed in the battery cell 100 and the busbar through a busbar mounted on the busbar frame 310. A connection unit (not illustrated) may be formed at a lower side of the upper plate 320 to electrically connect the busbar frames 310 formed at both ends of the battery cell stack 101. The busbar frame assembly 300 may be coupled to the front and rear surfaces and the upper surface of the battery cell stack 101.

End plates 400 may be disposed so as to cover the front and rear surfaces of the battery cell stack 101. The end plates 400 may be coupled to edge portions of the module frame 500 through welding.

The battery cells 100 disposed in the battery module 1000 occurs a swelling phenomenon, in which expands the volumes of the battery cells 100 expand while repeating charging and discharging, and due to the swelling of the battery cells, deformation may be occurred in the battery module and a battery pack on which the battery module is mounted. Therefore, before the battery module and the battery pack are deformed, it is possible to measure a swelling pressure and take a pretreatment based on the measured pressure value.

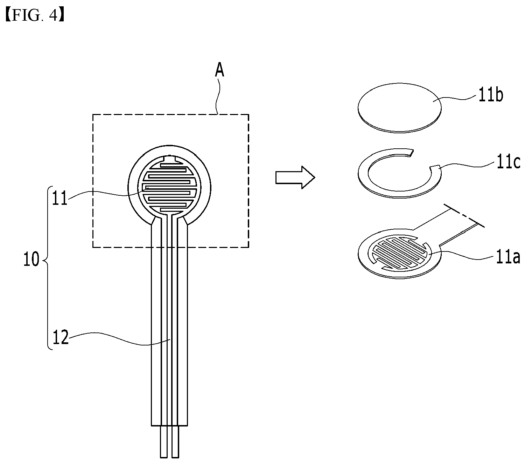

FIG. 4 is a view illustrating a configuration of a FSR sensor according to a comparative example the present invention.

When the swelling pressure of the battery cells is measured, the FSR sensor 10 illustrated in FIG. 4 can be used, and the FSR sensor 10 may include a measuring unit 11 configured to measure the pressure and an output unit 12 configured to transmit the measured pressure value to the outside. However, in the case of the FSR sensor 10, there is a problem that the size is very small and a measurable range thereof is narrow. Further, when the size of the FSR sensor 10 is simply made large to correspond to a surface of the battery cell, it is difficult for a spacer 11C formed in the interior of the FSR sensor 10 to support an upper plate 11B and a lower plate 11A of the FSR sensor 10, thereby making it difficult to measure a proper pressure because a middle part of the upper plate is deflected to the lower side.

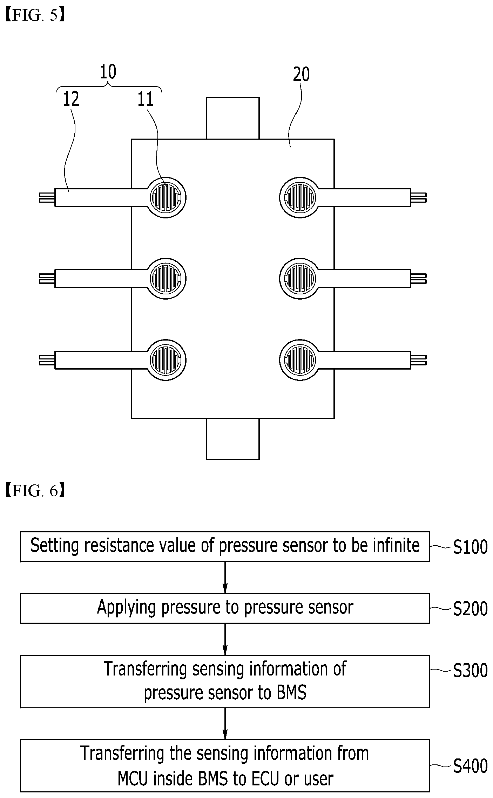

FIG. 5 is a view illustrating a state in which a plurality of FSR sensors according to the comparative example of the present disclosure are attached to the surface of battery cells.

Further, when the FSR sensors 10 are independently installed in respective areas of one battery cell 20 to measure a pressure of the battery cell as illustrated in FIG. 5, a plurality of FSR sensors 10 are necessary, and the plurality of FSR sensors 10 have to be installed in all of the respective areas. Therefore, many measuring devices are necessary, and the measured values are separately outputted through the output units 12 formed for the respective FSR sensors 10, thereby making it difficult to arrange the output values.

Thus, according to the present embodiment, the plurality of pressure measuring units 210 are arranged in rectangular grids on the surface of the battery cells 100 and the pressure measuring units 210 are connected to each other by the connection unit 220 to cover all ranges of the surfaces of the battery cells. Further, because the connection unit 220 is connected to one output unit 230, the pressure values measured through the plurality of the pressure measuring units 210 may be summed up into one output value through the output unit 230 formed of one, so that it easier to detect the swelling pressure.

Referring to FIG. 2, the battery cell 100 may include a cell body 110, a cell terrace 120, and an electrode lead 130, and the plurality of pressure measuring units 210 may be arranged on the body surface of the cell body 110.

Each of the plurality of pressure measuring units 210 may include a current input unit 211 and a current output unit 212, and the connection unit 220 may include a current input side connection unit 221 for connecting the current input units 211, and a current output side connection unit 222 connecting the current output units 212. Here, the output unit 230 may be connected to the current input side connection unit 221 and the current output side connection unit 222 to output the pressure value measured from the plurality of pressure measuring units.

The plurality of pressure measuring units 210 may have a circular shape having a pattern. In more detail, referring to FIG. 3, the current input side connection unit 221 and the current output side connection unit 222 may form an outskirt of the pressure measuring unit 210 of a circular shape and sensing units extending from the current input side connection unit 221 and the current output side connection unit 222 may form a pattern of the interior of a circular shape.

Hereinafter, a method for measuring a pressure of battery cells according to an embodiment of the present disclosure will be described with reference to FIG. 6.

FIG. 6 is a flowchart illustrating a method for measuring a pressure of battery cells according to the embodiment of the present invention.

Referring to FIG. 3 and 6, the method for measuring the pressure of battery cells includes a step of applying a pressure to a pressure sensor 200 while a battery cell 100 is swelled (S200), a step of transferring sensing information of the pressure sensor 200 to a BMS (battery management system) (S300), and a step of transferring the sensing information from a MCU (micro controller unit) inside the BMS to a user or an ECU (electric control unit) (S400). In more detail, in a battery cell for a vehicle, sensing information from the MCU may be transferred to the ECU of the vehicle, and in a battery cell for an ESS (energy storage system), sensing information from the MCU may be transferred to a user.

Swelling information measured from the pressure sensor 200 may be transferred to a user so that the user can take a pretreatment on a product before the battery module and the battery pack are deformed.

According to the present embodiment, in the step of transferring sensing information to a BMS, a warning signal may be transmitted when a resistance value of the pressure sensor 200 is 100,000 Ohm or less. Further, a danger signal may be transmitted when a resistance value of the pressure sensor 200 is 10,000 Ohm or less. This means that the pressure acts on the pressure sensor 200 more strongly as the resistance value decreases. Further, as the resistance value of the pressure sensor 200 decreases, the type of the signal depending on the swelling becomes different, so that a user can immediately recognize the danger level depending on the level of swelling according to the type of the signal in advance.

In order to exactly transmit signals of the pressure sensor, the method for measuring the pressure of the battery cell may further include a step of setting a resistance value of the pressure sensor to be infinite (S100) before the step of applying the pressure to the pressure sensor 200 while the battery cell 100 is swelled (S200). When the resistance value is infinite, it may mean that no pressure is acted, and when the resistance value decreases, it may mean that the pressure is increasingly acting on the pressure sensor 200.

The above-mentioned battery module may be included in the battery pack. The battery pack may have a structure in which one or more of the battery modules according to the present embodiment are gathered, and packed together with a battery management system (BMS) and a cooling device that control and manage battery's temperature, voltage, etc.

The battery pack can be applied to various devices. Such a device may be applied to a transportation means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present invention is not limited thereto, and numerous other modifications and embodiments can be devised by those skilled in the art that will fall within the scope of the appended claims.

### [Description of Reference Numerals]

- 100:: battery cell
- 101:: battery cell stack
- 110:: cell body
- 120:: cell terrace
- 130:: electrode lead
- 200:: pressure sensor
- 210:: pressure measuring unit
- 211:: current input unit
- 212:: current output unit
- 220:: connection unit
- 221:: current input side connection unit
- 222:: current output side connection unit
- 230:: output unit
- 300:: busbar frame assembly
- 310:: busbar frame
- 320:: upper plate
- 400:: end plate
- 500:: module frame
- 1000:: battery module

## Claims

1. A battery module (1000), comprising:
stacked battery cells (100); and
a pressure sensor (200) configured to measure the pressure of the battery cells (100) stacked in the interior of the battery module (1000),
**characterized in that**
the pressure sensor (200) comprises
a plurality of pressure measuring units (210);
a connection unit (220) for connecting the plurality of pressure measuring units (210) to each other; and
an output unit (230) connected to the connection unit (220) and configured to output pressure values measured through the pressure measuring units (210), and
wherein the plurality of pressure measuring units (210) are arranged on surfaces of the battery cells (100) to measure the pressure of the battery cells (100),
wherein the output unit (230) is formed of one unit, and the pressure values measured through the pressure measuring units (210) are summed up into one value and outputted.

2. The battery module (1000) according to claim 1,
wherein each of the plurality of pressure measuring units (210) comprises a current input unit (211) and a current output unit (212),
the connection unit (220) comprises:
a current input side connection unit (221) for connecting the current input units (211), and
a current output side connection unit (222) for connecting the current output units (212), and
the output units (230) are connected to the current input side connection unit (221) and the current output side connection unit (222) to output the pressure value measured by the plurality of pressure measuring units (210).

3. The battery module (1000) according to claim 1,
wherein each battery cell (100) comprises a cell body (110), a cell terrace (120), and an electrode lead (130), and
the plurality of pressure measuring units (210) are arranged on the body surfaces of the cell bodies (110).

4. The battery module (1000) according to claim 1,
wherein the plurality of pressure measuring units (210) are arranged in rectangular grids on the surfaces of the battery cells (100).

5. The battery module (1000) according to claim 1,
wherein the plurality of pressure measuring units (210) is formed of a circular shape having a pattern.

6. A method for measuring a pressure of battery cells (100) of the battery module (1000) according to any of claims 1 to 5, the method comprising the steps of:
applying a pressure to the pressure sensor (200) while the battery cells (100) are swelled (S200);
transferring sensing information of the pressure sensor (200) to a BMS (battery management system) (S300); and
transferring the sensing information from a MCU (micro controller unit) inside the BMS to an ECU (electric control unit) or a user (S400).

7. The method for measuring a pressure of battery cells (100) according to claim 6,
wherein the step of transferring sensing information to a BMS comprises transmitting a warning signal when a resistance value of the pressure sensor (200) is 100,000 Ohm or less.

8. The method for measuring a pressure of battery cells (100) according to claim 6,
wherein the step of transferring a sensing information to a BMS comprises transmitting a danger signal when a resistance value of the pressure sensor (200) is 10,000 Ohm or less.

9. The method for measuring a pressure of battery cells (100) according to claim 6,
which further comprises a step of setting a resistance value of the pressure sensor (200) to be infinite (S100), before the step of applying the pressure to the pressure sensor (200) while the battery cells (100) are swelled (S200).

## Patentansprüche

1. Batteriemodul (1000), umfassend:
gestapelte Batteriezellen (100); und
einen Drucksensor (200), der so konfiguriert ist, dass er den Druck der im Inneren des Batteriemoduls (1000) gestapelten Batteriezellen (100) misst,
**dadurch gekennzeichnet, dass** der Drucksensor (200) Folgendes umfasst
eine Vielzahl von Druckmesseinheiten (210);
eine Verbindungseinheit (220) zum Verbinden der Vielzahl von Druckmesseinheiten (210) untereinander; und
eine Ausgabeeinheit (230), die mit der Verbindungseinheit (220) verbunden ist und so konfiguriert ist, dass sie die durch die Druckmesseinheiten (210) gemessene Druckwerte ausgibt, und
wobei die Vielzahl von Druckmesseinheiten (210) auf Oberflächen der Batteriezellen (100) angeordnet ist, um den Druck der Batteriezellen (100) zu messen,
wobei die Ausgabeeinheit (230) aus einer Einheit gebildet ist und die durch die Druckmesseinheiten (210) gemessenen Druckwerte in einen Wert aufaddiert und ausgegeben werden.

2. Batteriemodul (1000) nach Anspruch 1,
wobei jede der Vielzahl von Druckmesseinheiten (210) eine Stromeingangseinheit (211) und eine Stromausgangseinheit (212) umfasst,
wobei die Verbindungseinheit (220) Folgendes umfasst:
eine stromeingangsseitige Verbindungseinheit (221) zum Verbinden der Stromeingangseinheiten (211), und
eine stromausgangsseitige Verbindungseinheit (222) zum Verbinden der Stromausgangseinheiten (212), und
wobei die Ausgabeeinheiten (230) mit der stromeingangsseitigen Verbindungseinheit (221) und der stromausgangsseitigen Verbindungseinheit (222) verbunden sind, um den durch die Vielzahl von Druckmesseinheiten (210) gemessenen Druckwert auszugeben.

3. Batteriemodul (1000) nach Anspruch 1,
wobei jede Batteriezelle (100) einen Zellenkörper (110), eine Zellenterrasse (120) und eine Elektrodenleitung (130) umfasst, und
die Vielzahl von Druckmesseinheiten (210) auf den Körperoberflächen der Zellenkörper (110) angeordnet ist.

4. Batteriemodul (1000) nach Anspruch 1,
wobei die Vielzahl von Druckmesseinheiten (210) in rechteckigen Gittern auf den Oberflächen der Batteriezellen (100) angeordnet ist.

5. Batteriemodul (1000) nach Anspruch 1,
wobei die Vielzahl von Druckmesseinheiten (210) aus einer kreisförmigen Form gebildet ist, die ein Muster aufweist.

6. Verfahren zum Messen eines Drucks von Batteriezellen (100) des Batteriemoduls (1000) nach einem der Ansprüche 1 bis 5, wobei das Verfahren folgende Schritte umfasst:
Anlegen eines Drucks an den Drucksensor (200), während die Batteriezellen (100) geschwollen (S200) sind;
Übertragen von Sensorinformationen des Drucksensors (200) an ein BMS (Batteriemanagementsystem) (S300); und
Übertragen der Sensorinformationen von einer MCU (Mikrosteuerungseinheit) innerhalb des BMS an eine ECU (elektrische Steuereinheit) oder einen Benutzer (S400).

7. Verfahren zum Messen eines Drucks von Batteriezellen (100) nach Anspruch 6,
wobei der Schritt des Übertragens von Sensorinformationen an ein BMS das Übertragen eines Warnsignals umfasst, wenn ein Widerstandswert des Drucksensors (200) 100.000 Ohm oder weniger ist.

8. Verfahren zum Messen eines Drucks von Batteriezellen (100) nach Anspruch 6,
wobei der Schritt des Übertragens von Sensorinformationen an ein BMS das Übertragen eines Gefahrsignals umfasst, wenn ein Widerstandswert des Drucksensors (200) 10.000 Ohm oder weniger ist.

9. Verfahren zum Messen eines Drucks von Batteriezellen (100) nach Anspruch 6,
das weiter einen Schritt des Einstellens eines Widerstandswerts des Drucksensors (200) auf unbegrenzt (S100) vor dem Schritt des Anlegens des Drucks an den Drucksensor (200), während die Batteriezellen (100) geschwollen (S200) sind, umfasst.

## Revendications

1. Module de batterie (1000), comprenant :
des éléments de batterie empilés (100) ; et
un capteur de pression (200) configuré pour mesurer la pression des éléments de batterie (100) empilés à l'intérieur du module de batterie (1000),
**caractérisé en ce que** le capteur de pression (200) comprend
une pluralité d'unités de mesure de pression (210) ;
une unité de raccordement (220) destinée à raccorder la pluralité d'unités de mesure de pression (210) les unes aux autres ; et
une unité de délivrance (230) raccordée à l'unité de raccordement (220) et configurée pour délivrer des valeurs de pression par l'intermédiaire des unités de mesure de pression (210), et
les unités de mesure de pression de la pluralité d'unités de mesure de pression (210) sont agencées sur des surfaces des éléments de batterie (100) pour mesurer la pression des éléments de batterie (100),
l'unité de délivrance (230) est formée par une unité, et les valeurs de pression mesurées par le biais des unités de mesure de pression (210) sont additionnées pour former une valeur et sont délivrées.

2. Module de batterie (1000) selon la revendication 1,
dans lequel chacune de la pluralité d'unités de mesure de pression (210) comprend une unité d'entrée de courant (211) et une unité de délivrance de courant (212),
l'unité de raccordement (220) comprend :
une unité de raccordement côté entrée de courant (221) destinée à raccorder les unités d'entrée de courant (211), et
une unité de raccordement côté sortie de courant (222) destinée à raccorder les unités de délivrance de courant (212), et
les unités de délivrance (230) sont raccordées à l'unité de raccordement côté entrée de courant (221) et à l'unité de raccordement côté sortie de courant (222) pour délivrer la valeur de pression mesurée par la pluralité d'unités de mesure de pression (210).

3. Module de batterie (1000) selon la revendication 1,
dans lequel chaque élément de batterie (100) comprend un corps de élément (110), une terrasse d'élément (120) et un fil d'électrode (130), et
la pluralité d'unités de mesure de pression (210) sont agencées sur les surfaces de corps des corps d'élément (110).

4. Module de batterie (1000) selon la revendication 1,
dans lequel la pluralité d'unités de mesure de pression (210) sont agencées dans des grilles rectangulaires sur les surfaces des éléments de batterie (100).

5. Module de batterie (1000) selon la revendication 1,
dans lequel la pluralité d'unités de mesure de pression (210) sont constituées d'une forme circulaire présentant un motif.

6. Procédé destiné à mesurer une pression d'éléments de batterie (100) du module de batterie (1000) selon l'une quelconque des revendications 1 à 5, le procédé comprenant les étapes suivantes :
appliquer une pression sur le capteur de pression (200) tandis que les éléments de batterie (100) sont gonflés (S200) ;
transférer des informations de détection du capteur de pression (200) à un système de gestion de batterie (BMS) (S300) ; et
transférer les informations de détection d'une unité formant microcontrôleur (MCU) à l'intérieur du BMS à une unité de commande électrique (ECU) ou à un utilisateur (S400).

7. Procédé destiné à mesurer une pression d'éléments de batterie (100) selon la revendication 6,
dans lequel l'étape consistant à transférer des informations de détection à un BMS comprend la transmission d'un signal d'avertissement lorsqu'une valeur de résistance du capteur de pression (200) est de 100 000 Ohm ou moins.

8. Procédé destiné à mesurer une pression d'éléments de batterie (100) selon la revendication 6,
dans lequel l'étape consistant à transférer des informations de détection à un BMS comprend la transmission d'un signal de danger lorsqu'une valeur de résistance du capteur de pression (200) est de 10 000 Ohm ou moins.

9. Procédé destiné à mesurer une pression d'éléments de batterie (100) selon la revendication 6,
qui comprend en outre une étape consistant à régler une valeur de résistance du capteur de pression (200) comme étant infinie (S100), avant l'étape consistant à appliquer la pression au capteur de pression (200) tandis que les éléments de batterie (100) sont gonflés (S200).
